# EUROPEAN PATENT SPECIFICATION

(11) **EP 2 653 837 B1**
(45) Date of publication and mention of the grant of the patent: **08.06.2016**
(21) Application number: 13162437.1
(22) Date of filing: 05.04.2013
(51) Int. Cl.: G01D 5/347

(54) **Rotary encoder**
Drehcodierer
Encodeur rotatif

(30) Priority: 19.04.2012 JP 2012095567
(43) Date of publication of application: 23.10.2013
(73) Proprietor: Dr. Johannes Heidenhain GmbH, 83301 Traunreut (DE)
(72) Inventor: Nakamura,, Yoshiyuki, Tokyo 243-0303 (JP)

(56) References cited:
- JP-A- 2006 112 965
- US-A- 4 472 713
- US-A- 4 894 533

## Description

The present invention relates to a rotary encoder capable of measuring the amount of movement or displacement, or the direction thereof, of an object being measured.

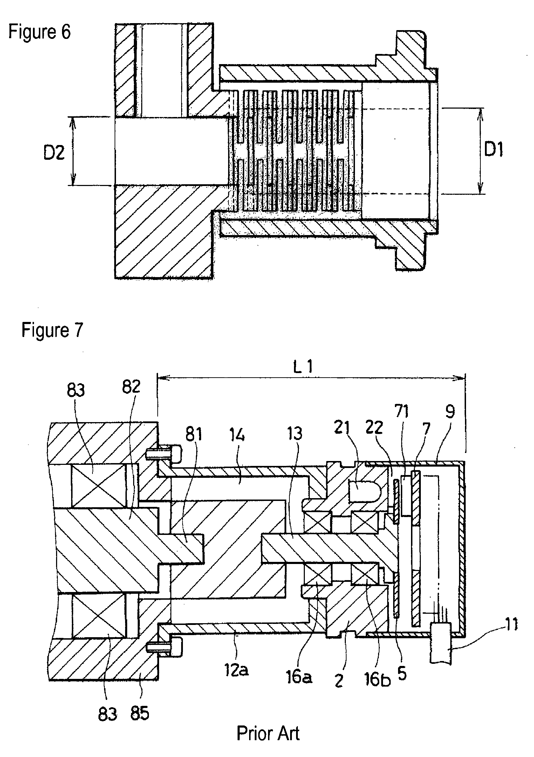

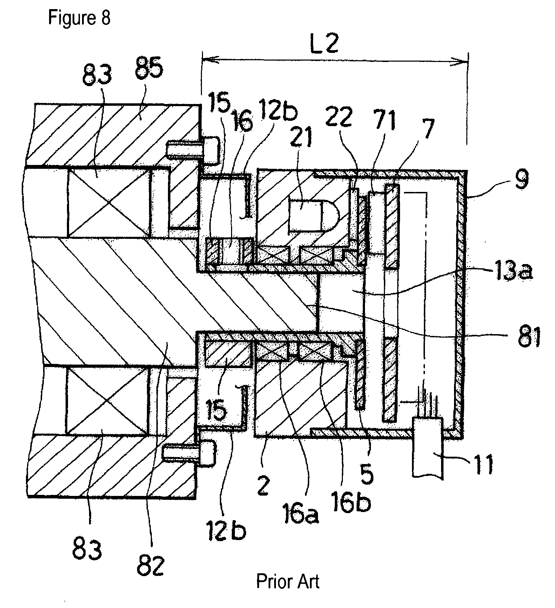

Conventionally, rotary encoders having a bar structure are broadly divided into shaft types and hollow types. As shown in Figure 7, for example, shaft-type encoders comprise a shaft 13 which is machined to a convex shape. Here, Figure 8 is a side view in cross section showing the general structure of a conventional shaft-type rotary encoder. In the figure, the rotary encoder comprises the shaft 13 and a coding plate 5 which is fixed to the shaft 13. Light radiated from a light-emitting element 21 disposed inside a base illuminates the coding plate 5 through a fixed slit 22. Transmitted light formed corresponding to the slit pattern falls on a light-receiving element 71 disposed at a position opposite a circuit board 7 and a predetermined signal is generated. When the shaft 13 revolves, the pattern on the coding plate 5 changes, so the signal changes and a signal corresponding to the amount of displacement of the shaft is generated. The signal generated is output to an external device by way of a cable 11.

The shaft 13 is rotatably fixed to a base 2 by way of bearings 16a, 16b. A cover 9 is fixed to the base 2 in order to protect the circuit board 7 and electronic components such as the light-emitting element 21 and the light-receiving element 71. A support member 12a is fixed to the base 2 and is fixed to an enclosure 85 of the object being measured such as a motor. A rotary shaft 82 of the object being measured is supported on the enclosure by way of a bearing 83, and is connected and fixed to the abovementioned shaft by way of a shaft coupling 14 from an output shaft 81 which is formed as a single piece with the rotary shaft 82. By this means, rotational movement of the rotary shaft 82 of the object being measured is transmitted to the shaft 13, which makes it possible to measure rotational movement of the object being measured.

In the case of this shaft-type encoder, the shaft coupling 14 is interposed and connected to the rotary shaft 81 of the object being measured. Vibration and displacement of the object being measured can therefore be absorbed by the shaft coupling, and the load on the encoder can be reduced. On the other hand, there are drawbacks in that an axial space proportional to the length of the shaft coupling 14 is required and the axial length L1 is increased.

Meanwhile, Figure 8 is a side view in cross section showing the general structure of a conventional hollow-type rotary encoder. In this example, a shaft 13a of the encoder is hollow, and the output shaft 81 which is the rotary shaft of the object being measured is fixedly accommodated inside said shaft. In order to fix the elements, a set screw or the like is screwed into a threaded hole 16 formed in a ring member 15 disposed at the end of the shaft, for example. By this means, rotational movement of the rotary shaft 82 of the object being measured is transmitted to the shaft 13a, which makes it possible to measure rotational movement of the object being measured.

In the case of this hollow-type encoder, the shaft coupling 14 is not interposed for connection to the rotary shaft 81. The axial length L2 can therefore be reduced in proportion to the length of the coupling, so this offers an advantage in that the structure can be made more compact. On the other hand, vibration and displacement of the object being measured cannot be absorbed by the thread coupling, and therefore there is a drawback in that the load on the encoder is increased.

US Patent 4472713 discloses an optical encoder provided with a flexible coupler 48. The flexible coupler 48 of this optical encoder functions essentially as a shaft and causes rotation of a disc 24 constituting a coding plate which is mounted on a disc table 26 fixed to the flexible coupler 48. A plurality of slits is then formed in the flexible coupler 26 in such a way that displacement is possible.

However, the flexible coupler 48 according to that document projects by a greater amount than the object being measured from the mounting position of ball bearing assemblies 30, 32. Moreover, the flexible coupler 48 also projects by a large amount towards the object being measured with respect to the disc table 26 which is disposed in such a way as to cover the flexible coupler 48 and cooperates therewith. In other words, there is a large amount of projection from the portion corresponding to what is known as the encoder body, which is where the required encoder function is provided. It is therefore difficult to make the encoder compact with the structure disclosed in that document.

US Patent 4752683 discloses a rotary encoder having a flexible coupling means. However, a coupling member 34 of the encoder in that document is disposed outside what is known as the encoder body and is not housed within. Furthermore, no investigations are carried out regarding a structure in which the size of the coupling member in the lengthwise direction is absorbed to make the assembly compact.

European Patent Application 0178694 discloses a rotary transducer comprising a hub 9 in which a spiral slot 13 is formed. However, an encoder disc 5 is directly fixed to the hub 9 in that document by means of an upper disc 7 and an elastic ring 8. Moreover, there is no bearing member such as a bearing: the assembly is arranged with no more than a shaft 16 inside a body 1. With this kind of structure, even though slight vibration is absorbed by the hub 9, shaft offset is unlikely to be absorbed, and actually making accurate measurements is difficult. Moreover, there is no bearing, so no investigations are made with regard to the relationship between the bearing and the coupling.

US Patent 4894533 discloses an optical encoder comprising a rigid shaft 3 with a centring arrangement. The centring function is achieved by using balls 6 which are loosely fitted in perforations 1d of a code plate 1. The balls 6 are resiliently contacted by a spring 14.

Japanese Application Publicatiohn JP 2006-112965 A describes two embodiments of a mounting structure for hollow shaft rotary encoders. In the first embodiment rubber packings 20 are provided at a non rotating mounting plate 15. The second embodiment comprises a conventional flexible shaft coupling 26.

### Summary of the Invention

The problem to be solved is that when a displaceable coupling is used in order to absorb axial offset with the object being measured and to absorb vibration so as to reduce the load on the encoder, a region of space is needed in order to position the coupling, so the encoder becomes larger and takes up extra space.

It is an object of the present invention to provide a rotary encoder a displaceable structure that can be installed in a compact manner. This object is accomplished according to the invention by the features of claim 1.

### Means of solving the Problem

The present invention has the following configuration in order to achieve the above mentioned object.

A rotary encoder comprises an encoder body, shaft assemblies and bearings. The shaft assemblies comprise a shaft main body and a hollow outer cylinder. The bearings are fixed to the encoder body and to the hollow outer cylinder to rotatably support the shaft assemblies with respect to the encoder body. The shaft main body to which a coding plate is fixed comprises a front part, a fixing part and a displaceable structure. The displaceable structure is housed in the outer cylinder. The fixing part is configured to be fixed to the object being measured to cause rotation of the coding plate for generating a measurement signal. The displaceable structure is formed between the fixing part and the front part. The shaft main body is housed inside the outer cylinder and is partly fixed to the outer cylinder at the front part. A gap configured to enable displacement of the displaceable structure is provided at least between the displaceable structure and the outer cylinder.

The fixing part and the displaceable structure may be hollow, wherein the inner diameters of the fixing part and the displaceable structure are different.

The inner diameter of the fixing part may be larger than the inner diameter of the displaceable structure.

The fixing part may comprise a radially oriented threaded hole configured to fix the object being measured by means of a screw.

The shaft main body may have an I-shaped form with enlarged diameter parts at both ends, wherein the enlarged diameter parts are the fixing part and the front part of the shaft main body.

The front part of the shaft main body may be housed in the outer cylinder as well.

The rotary encoder may be configured such that the outer cylinder is interposed between the bearings and the shaft main body, in particular such that the outer cylinder is interposed between the bearings and the displaceable structure.

By the present invention a rotary encoder is provided which has the benefits of both hollow-type and shaft-type encoders, which can absorb vibration from an object being measured and which has a built-in structure which can be housed in a compact manner inside an encoder body, and can be constructed in a compact manner overall.

### Brief Description of the Figures

- Figure 1: is a view in cross section showing the configuration of an encoder according to a first mode of the present invention (Exemplary Embodiment 1);
- Figure 2: is a view in cross section showing the configuration of the shaft main body and outer cylinder of the encoder according to the first mode of the present invention (Exemplary Embodiment 1);
- Figure 3: is a view in cross section showing the configuration of the shaft main body and outer cylinder of an encoder according to a second mode of the present invention (Exemplary Embodiment 2);
- Figure 4: is a view in cross section showing the configuration of the shaft main body and outer cylinder of an encoder according to a third mode of the present invention (Exemplary Embodiment 3);
- Figure 5: is a side view showing the dimensional relationship of the fixing part and displacement part of the shaft main body;
- Figure 6: is a side view showing the dimensional relationship of the fixing part and displacement part of the shaft main body;
- Figure 7: is a view in cross section showing an exemplary configuration of a conventional shaft-type encoder; and
- Figure 8: is a view in cross section showing an exemplary configuration of a conventional hollow-type encoder.

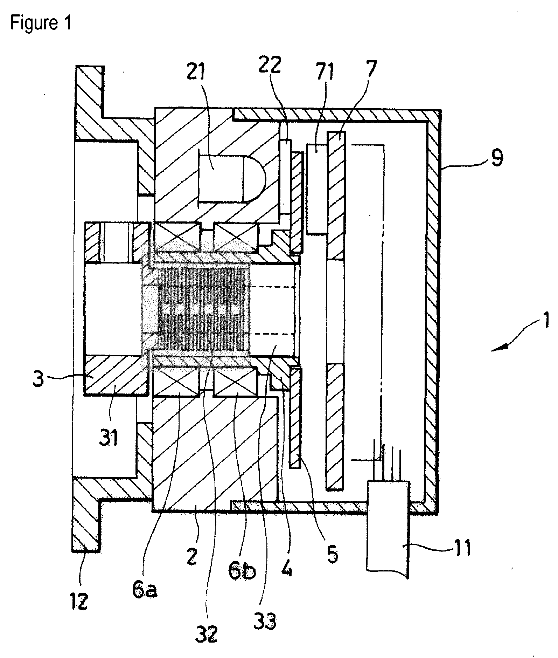

As shown in Figure 1, for example, a rotary encoder 1 according to the present invention comprises: shaft assemblies 3, 4 which can be fixed to and can cooperate with an object being measured, and cause rotation of a coding plate 5 for generating a measurement signal. The rotary encoder 1 comprises bearings 6a, 6b for rotatably supporting the shaft assemblies 3, 4, and a base 2 (encoder body) to which the bearings 6a, 6b are fixed. Moreover, the shaft assemblies 3, 4 comprise a hollow outer cylinder 4 which is fixed to the bearings 6a, 6b and a shaft main body 3 which is housed inside the outer cylinder 4 and is partly fixed to the outer cylinder 4. The shaft main body 3 comprises a displaceable structure 32 which is housed in the outer cylinder 4, the shaft main body 3 is fixed to the outer cylinder part at a front part 33 ahead of the structure 32 from a portion 31 which is fixed to the object being measured, and a predetermined gap which enables displacement of the structure is provided at least between the displaceable structure 32 and the outer cylinder 4.

In this way, it is possible to provide an encoder having a structure corresponding to a conventional rotary shaft, in which shaft assemblies comprise a hollow outer cylinder 4 and a shaft main body 3, the shaft main body 3 is housed inside the outer cylinder 4, and the shaft main body 3 is endowed with flexibility so that it can absorb offset and deviation of the shaft centre and vibration etc., and it is possible to absorb vibration of the object being measured and offset of the shaft centre within the same size as in the prior art and without a special space being occupied.

The shaft main body 3 can be fixed or joined to the object being measured in order to transmit rotational movement of the object being measured to inside the encoder. Preferably, the shaft main body 3 is an I-shaped or T-shaped cylindrical or columnar member having an enlarged diameter part at both ends, and comprises a hollow cylindrical fixing part 31 on the enlarged diameter part of the T or I which is fixed to the rotary shaft of the object being measured. The fixing part 31 has any shape and the size is adjusted to match the shape and size of the rotary shaft of the object being measured which is fixed or joined thereto.

In addition, an interlocking part to which the outer cylinder 4 is fixedly fitted is formed at a front part 33 of the shaft main body 3 at the other end opposite to the fixing part 31. This interlocking part is fixedly fitted inside the front part of the outer cylinder 4. Furthermore, the inside surface of the outer cylinder 4 is arranged with a predetermined gap from the outer periphery of a displaceable structure 32 which will be described later, and therefore the inner diameter of the outer cylinder part is normally set to be a certain amount larger than the outer diameter of the displaceable structure 32. The outer diameter of the interlocking part, in particular the front part 33, is therefore also set at a size in accordance with the inner diameter of the outer cylinder part, and the two can be exactly fitted together and fixed. It should be noted that adhesive, viscous resin or a sealing agent etc. may be provided on the interlocking part in order to provide firmer fixing, and depending on the circumstances, either adhesion or welding may be used for the fixing, or both may be used together.

The displacement part which comprises the displaceable structure 32 is formed between the fixing part 31 and the interlocking part, in particular the front part 33, of the shaft main body 3. The displaceable structure 32 has the function of transmitting rotation while also absorbing an offset between the fixing part 31 and the interlocking part, in particular the front part 33, and absorbing mechanical stress such as vibration from the object being measured. For the displacement part, it is possible to employ various kinds of displaceable structures which are used for known flexible couplings, provided that such a structure has the abovementioned function. There is no particular limitation as to the structure of the displacement part, and a structure in which alternating slits are provided from multiple directions, as shown in the figure, is feasible, and it is also possible to adopt a structure which can demonstrate flexibility which is provided with spiral-shaped slits or various shapes of slits, or another displaceable shape. Furthermore, a structure is also feasible which is provided with a member which is flexible in itself, such as a spring. The whole of the shaft main body 3 preferably comprises one member, mainly from the point of view of production costs, and a structure in which the displaceable structure 32 and the shaft main body 3 are formed as a single piece is preferred.

The displacement part, in particular the displaceable structure 32, is preferably hollow in order to fully utilize structural advantages which will be described below. Furthermore, the length thereof must be a length allowing installation inside the encoder body 2, and is at least a length which can be housed inside the outer cylinder 4. Furthermore, if the outer cylinder 4 is supported by two bearings 6a, 6b, a length allowing installation between these bearings 6a, 6b should be used.

There is no particular limitation as to the amount of displacement of the displacement part, and it should be set to the optimum range of movement according to the size of the shaft and device, and the required absorption capability for shaft offset and vibration. Specifically, in the case of a conventional small encoder having a shaft diameter of 4 - 10 mm, the amount of displacement depends on the permitted space, but it is preferred for deformation to be possible in a range of 0.01 - 0.5 mm in a direction perpendicular to the shaft of the object being measured and a range of ± 0.8 mm in the axial direction, and a range of 0.05 - 0.3 mm in a direction perpendicular to the shaft and a range of ±0.5 mm in the axial direction is more preferred. Furthermore, in the case of an encoder which has a different size to that described above, the preferred amount of displacement varies in proportion to the shaft diameter.

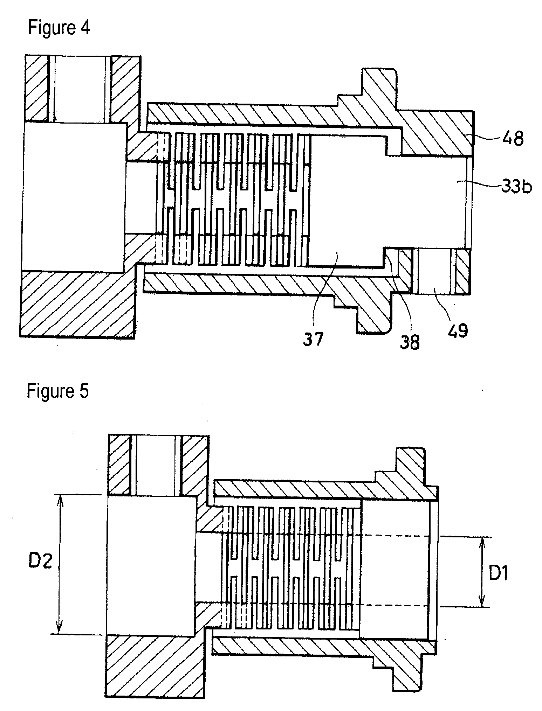

As shown in Figures 4 and 5, for example, the rotary encoder according to the present invention is such that the inner diameter D2 of the fixing part 31 and the inner diameter D1 of the displacement part, in particular of the displaceable structure 32, are different. When the inner diameter D2 of the fixing part 31 and the inner diameter D1 of the displacement part, in particular of the displaceable structure 32, are different, the inner diameter D2 of the fixing part 31 may be larger, as shown in Figure 5, or the inner diameter D1 of the displaceable structure 32 may be larger, as shown in Figure 6. By making the two inner diameters different, it is possible to prevent displacement operations of the displacement part, in particular of the displaceable structure 32, formed on the shaft main body 3 from being structurally restricted.

Specifically, if the inner diameter D2 of the fixing part 31 is larger, the rotary shaft of the object being measured which has been inserted into the fixing part 31 cannot be advanced as far as the displacement part, in particular as far as the displaceable structure 32, and therefore it is stopped at the fixing part 31. By preventing the rotary shaft of the object being measured from advancing as far as the inside of the displacement part, it is possible to prevent displacement operations of the displacement part from obstructing the rotary shaft which has advanced. The attachment to the object being measured is normally performed by the customer, and therefore it is possible to prevent faults due to incorrect attachment by the customer.

On the other hand, if the inner diameter D1 on the displacement part side is larger, then even if the rotary shaft of the object being measured were to enter as far as the inside of the displacement part, a predetermined gap is present between the inside surface of the displaceable structure 32 and the outside surface of the rotary shaft. Displacement operations of the displacement part are therefore ensured by this gap. It should be noted that the difference between the inner diameters of the fixing part 31 and the displaceable structure 32 should be set at a size which makes it possible to ensure clearance such that the required amount of displacement can be maintained. Specifically, this difference is normally set to be at least 10% greater than the inner diameter of the fixing part 31, and is preferably set to be greater within the possible range when there is a margin in the dimensions.

The outer cylinder 4 is a hollow cylindrical member which is rotatably fixed to the base part (encoder body 2) of the encoder with a bearing 6a, 6b interposed. Furthermore, the inner peripheral surface of the front part thereof and the interlocking part, in particular the front part 33 of the shaft main body 3 are tightly fixed. As a result, the shaft main body 3 is pivotably supported by means of the bearing 6a, 6b which is fixed to the encoder body 2 with the outer cylinder 4 interposed, thus enabling stable rotation and pivoting.

The outer cylinder 4 comprises an enlarged diameter flange part on the outer periphery in the region of the front part, and a hollow disc-shaped coding plate 5 is fixed thereto. On the coding plate 5, a coding pattern corresponding to the function of the encoder, such as an incremental or absolute encoder, is normally formed on a transparent member such as glass. When the coding plate 5 rotates, changes in the pattern are detected by means of a light-emitting element such as an LED disposed on the encoder body 2 and a light-receiving element on a circuit board disposed opposite with the coding plate 5 there between, and the detected change is converted to a predetermined signal. As a result, rotational movement of the shaft main body 3 fixed to the object being measured is converted to an electrical signal and the assembly operates as what is known as a rotary encoder.

The inner peripheral surface of the outer cylinder 4 normally has the shape of a flat cylinder, but a thick-wall part projecting in the centre direction may be formed by providing a step at the front part. When the thick-wall part and the interlocking part of the shaft main body 3 are fixed, there is no need to enlarge the diameter of the interlocking part. Adopting a structure in which the thick-wall part is provided, or adopting a structure, in which the interlocking part of the shaft main body 3 is enlarged, as described above, may thus be selected as alternatives, or a combined structure may be adopted.

The inner surfaces of the outer cylinder 4 and of the displacement part, in particular of the displaceable structure 32, of the shaft main body 3 are formed opposite each other at a predetermined gap to allow displacement operations of the displaceable structure 32. The gap should be set to the optimum width which enables displacement operations. Specifically, in the case of a conventional small encoder having a shaft diameter of 4 - 10 mm, this gap is normally 1 - 2 mm, and is preferably set to be greater within the possible range when there is a margin in the dimensions. Furthermore, if the shaft diameter is different from the diameter mentioned above, the range of the gap varies in proportion to the shaft diameter.

Furthermore, most or all of the shaft main body 3 apart from the fixing part 31 is preferably housed inside the outer cylinder 4. Specifically, preferably at least 70%, more preferably at least 80%, and especially at least 90% of the region excluding the enlarged diameter portion of the fixing part 31 should be housed inside the outer cylinder 4. By housing the shaft main body 3 inside the outer cylinder 4, it is possible to minimize the region of space occupied by the shaft main body 3 and the encoder can be made compact.

The material forming the shaft main body 3 and the outer cylinder 4 which may be used is a material which is conventionally used as a shaft material in rotary encoders. Specifically, it is possible to use alloys or metallic compounds in which steel is the main component, such as carbon steel (normal steel), alloy steel (special steel), nickel-chromium steel, nickel-chromium-molybdenum steel, chromium steel, chromium-molybdenum steel and manganese steel; or, depending on the application, aluminium or aluminium compounds such as duralumin, titanium or compounds thereof, or metallic compounds such as brass or gunmetal.

Furthermore, if strength and durability etc. are not issues, the shaft main body 3 or the outer cylinder 4 may be made of a resin material in order to prevent electric corrosion caused by electrical current flowing in from the rotary shaft of the object being measured.

According to the present invention, the structural elements other than the outer cylinder 4 and the shaft main body 3 are the same as those of a normal rotary encoder, and the example described above relates to an optical encoder, but it is possible to freely select either an optical encoder or a magnetic encoder.

### Exemplary Embodiment 1

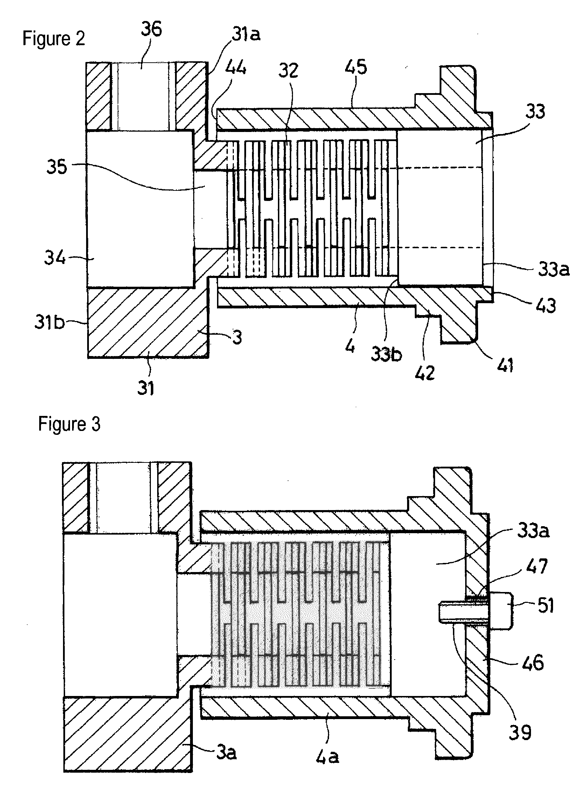

Exemplary embodiments will be presented next in order to describe the present invention in more specific terms. Figure 1 is a view in cross section of a rotary encoder according to a first mode of the present invention, and Figure 2 is a view in cross section of the shaft main body 3 and outer cylinder 4. In Figures 1 and 2, a rotary encoder 1 comprises bearings 6a, 6b which are fixed to a encoder body 2 (base); an outer cylinder 4 which is pivotably fixed to the bearings 6a, 6b; and a shaft main body 3 which is fixed to the front part of the outer cylinder 4.

The outer cylinder 4 is a hollow cylindrical member which is open at both ends, and is rotatably supported and fixed by means of the bearings 6a, 6b which are fixed to the encoder body 2. The outer cylinder 4 is interposed between the bearings 6a, 6b and the shaft main body 3 so that the shaft main body 3 is pivotably fixed. The outer cylinder 4 fixes a coding plate 5 which will be described later so that said coding plate 5 moves in response to operation of the shaft main body 3. The bearings 6a, 6b are disposed between a rear end 44 of the outer cylinder 4 and a step part 42. A single bearing may be provided, but multiple bearings are preferably provided from the point of view of stable shaft operation.

The hollow disc-shaped coding plate 5 which is made of glass or the like is fixed to a flange 41 where the outer periphery at the front of the outer cylinder 4 is enlarged. A light-emitting element 21 such as an LED is disposed on the encoder body 2, and when a light beam radiated through a fixed slit 22 passes through the coding plate 5, the transmitted light changes according to a predetermined pattern formed on the coding plate 5 and arrives at a light-receiving element 71 disposed opposite the light-emitting element 21 with the coding plate 5 there between, and an electrical signal corresponding to the transmitted light is generated.

The electrical signal output from the light-receiving element 71 is subjected to the required processing by means of various kinds of circuit elements disposed on a circuit board 7 which is supported, and the electrical signal is subjected to analogue/digital conversion; for example, a measurement signal is generated such as an incremental signal with a 90° phase difference comprising an A phase and B phase. The measurement signal generated is converted to a specific form of output signal by way of an interface element and driver element etc. which are mounted on the circuit board 7, and then sent to an external device by means of an output line 11.

The shaft main body 3 is a hollow cylindrical member, and a fixing part 31 of enlarged diameter that is fixed to a rotary shaft of the object being measured is formed at one end thereof. The inner diameter of the fixing part 31 is formed to match the outer diameter of the rotary shaft of the object being measured which is attachable, and is sized in such a way that precise interlocking is possible. In this example, the fixing part 31 comprises a threaded hole 36 and can firmly fix a rotary shaft which has been inserted by means of a truss screw or the like. Various shapes may be adopted for the fixing part 31 in order to match the shape of the object being measured, and the shape is not limited to a cylindrical shape.

A displacement part in which a deformable or displaceable structure 32 is formed is provided in the centre of the body of the shaft main body 3. The displaceable structure 32 may be provided with a plurality of slits which is shown in the figures and has already been described, or it may be a known deformable coupling structure. The displaceable structure 32 has a size such that it can be housed inside the outer cylinder 4, which will be described later.

The front part 33 which is the other end of the shaft main body 3 is formed with an enlarged-diameter interlocking part. This interlocking part (front part 33) is formed with a cylindrical shape in which the diameter is greater than that of the displacement part, according to this example. The outer peripheral portion of the interlocking part (front part 33) comes into close contact with and is fixed to the inner peripheral portion of the outer cylinder 4. The inner diameter of the outer cylinder 4 corresponding to the outer diameter of the interlocking part (front part 33) is set in such a way that the diameters are substantially the same. The interlocking part (front part 33) and the front part of the outer cylinder 4 may be adequately fixed by means of simple mechanical linking afforded by interlocking, but they may be more firmly fixed by using a known fixing means such as adhesive.

The difference between the outer diameter of the interlocking part, in particular the front part 33, and the outer diameter of the displaceable structure 32, which is to say the difference between the inner diameter of the outer cylinder 4 and the outer diameter of the displaceable structure 32 is twice the gap between the displaceable structure 32 and the outer cylinder 4, and therefore the outer diameter of the interlocking part, in particular the front part 33, and the inner diameter of the outer cylinder 4 are set in such a way that the required gap width is achieved. The length of the interlocking part should be a size whereby the required strength is achieved, but this length is adjusted to a size which allows the interlocking part, in particular the front part 33, to be housed inside the encoder body 2, especially inside the outer cylinder 4. It should be noted that in the example depicted, the front end of the interlocking part, in particular the front part 33, is disposed in such a way as to be positioned slightly further towards the middle than the front end of the outer cylinder 4.

In this exemplary embodiment, the outer cylinder 4 and the shaft main body 3 may be made of the same material, or different materials may be used. If different materials are used, it is possible to prevent electric corrosion caused by electrical current flowing in from the fixing part 31 by using a resin material for either of the materials, for example.

The encoder body 2 to which the bearings 6a, 6b are fixed has the function of supporting and securing the main structural members. A support member 12 is attached to the rear of the encoder body 2 on the side of the object being measured, and can be fixed to the enclosure of the object being measured (not depicted). Furthermore, a cover 9 is fixedly provided on the front part of the encoder body 2, and this serves to protect the circuit board 7 and the components of the optical system etc. from the external environment. The rest of the configuration is the same as in a conventional rotary encoder so this will not be described in detail.

As described above, a rotary shaft function is enabled by means of two members, namely the shaft main body 3 and the outer cylinder 4, and the displaceable structure 32 is disposed inside the outer cylinder 4, so it is possible to also accommodate the function of a displaceable shaft coupling inside substantially the same space as in a conventional encoder, and it is possible to provide a small rotary encoder which can deal with axial displacement.

### Exemplary Embodiment 2

Figure 3 is a view in cross section showing a second exemplary embodiment of the present invention, and depicts a second mode of a shaft main body 3a and the outer cylinder 4a. In this example, a front part 46 of an outer cylinder 4a is formed with a closed shape. That is to say, the front part 46 of the outer cylinder 4a is closed rather than open, and is shaped in such a way that an exact circular cover is provided. A stop hole 47 is formed in the central part of the front part 46 of the outer cylinder 4a, and a front part 33a of a shaft main body 3a is fixed therein by means of a screw 51. There is no internal cavity in the front part 33a of the shaft main body 3a, which is shaped like a cylindrical block, and a threaded hole 39 is likewise formed at a position in the central part thereof corresponding to the stop hole 47, and the assembly can be fixed by means of the screw 51.

The shaft main body 3a and the outer cylinder 4a are fixed in this way by means of screwing, and therefore it is a simple matter to fix the two firmly together, and they can also be easily detached.

### Exemplary Embodiment 3

Figure 4 is a view in cross section showing a third exemplary embodiment of the present invention, and depicts a third mode of the shaft main body and the outer cylinder. In this example, the front part of the outer cylinder is formed with a thick-wall part, and is formed in such a way as to enable screw-fixing from a direction perpendicular to the shaft. That is to say, a thick-wall part 48 is formed at the front part of the outer cylinder and the inner peripheral surface of the outer cylinder projects in a direction perpendicular to the shaft. Meanwhile, a block-shaped cylinder 37 which has no internal cavity and is contiguous with the displaceable structure is formed, on the front part 33b of the shaft main body, as a cylindrical block having a smaller diameter than the diameter of the displaceable structure by means of a step part 38, and the front part 33b is formed to have a size which corresponds exactly to the width of the projection of the thick-wall part 48 in order to be able to interlock therewith.

A threaded hole 49 is then formed in the thick-wall part 48 in the direction perpendicular to the shaft running from the side surface towards the centre of the shaft, and a stop screw such as a set screw is disposed and fastened therein, whereby the tip end of the screw comes into abutment with and presses the front part 33b of the shaft main body inside, which is thereby fixed. It should be noted that the rest of the configuration is the same as in Exemplary Embodiments 1 and 2 described above, so a description will not be given in this exemplary embodiment.

The shaft main body and the outer cylinder are fixed in this way by means of screwing, and therefore it is a simple matter to fix the two firmly together, and they can also be easily detached.

The rotary encoder according to the present invention is not particularly restricted in terms of the detection method, and it may be broadly applied to various types of encoder, provided that it is a type of encoder which is joined to a rotary shaft of an object being measured which rotates or pivots.

## Claims

1. A rotary encoder (1) comprising:
- an encoder body (2),
- shaft assemblies (3; 3a, 4) comprising
a) a shaft main body (3; 3a) and
b) a hollow outer cylinder (4; 4a),
- bearings (6a, 6b) which are fixed to the encoder body (2) and to the hollow outer cylinder (4; 4a) to rotatably support the shaft assemblies (3; 3a, 4), wherein
the shaft main body (3; 3a) to which a coding plate (5) is fixed comprises
a) a displaceable structure (32) which is housed in the outer cylinder (4; 4a),
b) a front part (33; 33a; 33b) and
c) a fixing part (31) which is configured to be fixed to an object being measured to cause rotation of the coding plate (5) for generating a measurement signal, wherein
the displaceable structure (32) is formed between the fixing part (31) and the front part (33; 33a; 33b),
the shaft main body (3; 3a) is housed inside the outer cylinder (4; 4a) and is partly fixed to the outer cylinder (4; 4a) at the front part (33; 33a; 33b) which is housed in the outer cylinder (4; 4a),
a gap configured to enable displacement of the displaceable structure (32) is provided at least between the displaceable structure (32) and the outer cylinder (4; 4a), wherein
the fixing part (31) and the displaceable structure (32) are hollow, wherein the inner diameters (D2; D1) of the fixing part (31) and the displaceable structure (32) are different.

2. A rotary encoder according to claim 1, wherein the inner diameter (D2) of the fixing part (31) is larger than the inner diameter (D1) of the displaceable structure (32).

3. A rotary encoder according to any preceding claim, wherein, the fixing part (31) comprises a radially oriented threaded hole (36) to fix the object being measured by means of a screw.

4. A rotary encoder according to any preceding claim, wherein the shaft main body (3; 3a) has an I-shaped form with enlarged diameter parts at both ends, wherein the enlarged diameter parts are the fixing part (31) and the front part (33; 33a; 33b).

5. A rotary encoder according to any preceding claim, wherein the outer cylinder (4; 4a) is interposed between the bearings (6a, 6b) and the shaft main body (3; 3a).

6. A rotary encoder according to any preceding claim, wherein the outer cylinder (4; 4a) is interposed between the bearings (6a, 6b) and the displaceable structure (32).

## Patentansprüche

1. Drehgeber (1), umfassend:
- einen Geberkörper (2),
- Wellenbaugruppen (3; 3a, 4), umfassend
a) einen Wellenhauptkörper (3; 3a) und
b) einen hohlen Außenzylinder (4; 4a),
- Lager (6a, 6b), die an dem Geberkörper (2) und dem hohlen Außenzylinder (4; 4a) befestigt sind, um die Wellenbaugruppen (3; 3a, 4) drehbar abzustützen, wobei
der Wellenhauptkörper (3; 3a), an dem eine Codierplatte (5) befestigt ist, umfasst:
a) eine verlagerbare Struktur (32), die in dem Außenzylinder (4; 4a) aufgenommen ist,
b) einen vorderen Teil (33; 33a; 33b) und
c) ein Befestigungsteil (31), das zum Befestigen eines Objekts konfiguriert ist, das gemessen wird, um die Drehung der Codierplatte (5) zum Erzeugen eines Messsignals zu bewirken, wobei
die verlagerbare Struktur (32) zwischen dem Befestigungsteil (31) und dem vorderen Teil (33; 33a; 33b) ausgebildet ist,
wobei der Wellenhauptkörper (3; 3a) innerhalb des Außenzylinders (4; 4a) aufgenommen ist und teilweise am Außenzylinder (4; 4a) am vorderen Teil (33; 33a; 33b) befestigt ist, der im Außenzylinder (4; 4a) aufgenommen ist,
wobei ein Spalt zum Ermöglichen der Verlagerung der verlagerbaren Struktur (32) mindestens zwischen der verlagerbaren Struktur (32) und dem Außenzylinder (4; 4a) vorgesehen ist, wobei
das Befestigungsteil (31) und die verlagerbare Struktur (32) hohl sind, wobei die Innendurchmesser (D2; D1) des Befestigungsteils (31) und der verlagerbaren Struktur (32) unterschiedlich sind.

2. Drehgeber nach Anspruch 1, wobei der Innendurchmesser (D2) des Befestigungsteils (31) größer als der Innendurchmesser (D1) der verlagerbaren Struktur (32) ist.

3. Drehgeber nach einem der vorhergehenden Ansprüche, wobei das Befestigungsteil (31) eine radial ausgerichtete Gewindebohrung (36) umfasst, um das gemessene Objekt mittels einer Schraube zu fixieren.

4. Drehgeber nach einem der vorhergehenden Ansprüche, wobei der Wellenhauptkörper (3; 3a) eine I-förmige Gestalt mit Teilen vergrößerten Durchmessers an beiden Enden aufweist, wobei die Teile mit vergrößertem Durchmesser das Befestigungsteil (31) und der vordere Teil (33; 33a; 33b) sind.

5. Drehgeber nach einem der vorhergehenden Ansprüche, wobei der Außenzylinder (4; 4a) zwischen den Lagern (6a, 6b) und dem Wellenhauptkörper (3; 3a) angeordnet ist.

6. Drehgeber nach einem der vorhergehenden Ansprüche, wobei der Außenzylinder (4; 4a) zwischen den Lagern (6a, 6b) und der verlagerbaren Struktur (32) angeordnet ist.

## Revendications

1. Encodeur rotatif (1) comportant :
- un corps (2) d'encodeur,
- des ensembles (3 ; 3a, 4) d'arbres comportant
a) un corps principal (3 ; 3a) d'arbre et
b) un cylindre extérieur creux (4 ; 4a),
- des roulements (6a, 6b) qui sont fixés au corps (2) d'encodeur et au cylindre extérieur creux (4 ; 4a) pour guider en rotation les ensembles (3 ; 3a, 4) d'arbres, le corps principal (3 ; 3a) d'arbre auquel est fixée une plaque (5) de codage comportant
a) une structure déplaçable (32) qui est logée dans le cylindre extérieur (4 ; 4a),
b) une partie avant (33 ; 33a ; 33b) et
c) une partie (31) de fixation qui est configurée pour être fixée à un objet en cours de mesure afin de provoquer une rotation de la plaque (5) de codage pour générer un signal de mesure,
la structure déplaçable (32) étant formée entre la partie (31) de fixation et la partie avant (33 ; 33a ; 33b),
le corps principal (3 ; 3a) d'arbre étant logé à l'intérieur du cylindre extérieur (4 ; 4a) et étant partiellement fixé au cylindre extérieur (4 ; 4a) au niveau de la partie avant (33 ; 33a ; 33b) qui est logée dans le cylindre extérieur (4 ; 4a),
un écartement configuré pour permettre le déplacement de la structure déplaçable (32) étant ménagé au moins entre la structure déplaçable (32) et le cylindre extérieur (4 ; 4a),
la partie (31) de fixation et la structure déplaçable (32) étant creux, les diamètres intérieurs (D2 ; D1) de la partie (31) de fixation et de la structure déplaçable (32) étant différents.

2. Encodeur rotatif selon la revendication 1, le diamètre intérieur (D2) de la partie (31) de fixation étant supérieur au diamètre intérieur (D1) de la structure déplaçable (32).

3. Encodeur rotatif selon l'une quelconque des revendications précédentes, la partie (31) de fixation comportant un trou taraudé (36) orienté radialement pour fixer l'objet en cours de mesure au moyen d'une vis.

4. Encodeur rotatif selon l'une quelconque des revendications précédentes, le corps principal (3 ; 3a) d'arbre présentant une forme en I avec des parties de diamètre agrandi aux deux extrémités, les parties de diamètre agrandi étant la partie (31) de fixation et la partie avant (33 ; 33a ; 33b).

5. Encodeur rotatif selon l'une quelconque des revendications précédentes, le cylindre extérieur (4 ; 4a) étant interposé entre les roulements (6a, 6b) et le corps principal (3 ; 3a) d'arbre.

6. Encodeur rotatif selon l'une quelconque des revendications précédentes, le cylindre extérieur (4 ; 4a) étant interposé entre les roulements (6a, 6b) et la structure déplaçable (32).
